Europäisches Patentamt

European Patent Office

Office européen des brevets

(19)

(11) Publication number: **0 492 742 A1**

# (12) EUROPEAN PATENT APPLICATION

(21) Application number: **91203403.0**

(22) Date of filing: **23.12.91**

(51) Int. Cl.⁵: **B62H 5/00**, B62J 11/00

(30) Priority: **21.12.90 NL 9002858**

(43) Date of publication of application:
**01.07.92 Bulletin 92/27**

(84) Designated Contracting States:
**BE DE DK ES FR GB IT NL**

(71) Applicant: **Doppenberg, Gerrit**
**Schoonhoverweg 7**
**NL-3881 ST Putten (GLd) (NL)**

(72) Inventor: **Doppenberg, Gerrit**
**Schoonhoverweg 7**
**NL-3881 ST Putten (GLd) (NL)**

(74) Representative: **Smulders, Theodorus A.H.J.,**
**Ir. et al**
**Vereenigde Octrooibureaux Nieuwe Parklaan**
**97**
**NL-2587 BN 's-Gravenhage (NL)**

(54) **Lock system for protecting a light vehicle against theft.**

(57) A lock comprises a substantially U-shaped shackle (1) and a closure unit (3) to be connected to the free ends (2) of the U-shaped shackle (1). Storage means for attaching the lock to a vehicle comprise guide means for at least the legs (16) of the U-shaped shackle (1) and a closure unit holder (6, 39, 40, 41) engaging the closure unit (3). The closure unit holder is so arranged that the closure unit (3) in the stored condition prevents the removal of at least the legs (16) of the U-shaped shackle (1) from the guide means. According to the invention, the closure unit holder (6, 39, 40, 41) is so constructed that it is uncoupled when the locking is released. This permits ready removal of the the lock and enables reliable attachment of the lock.

Fig. 11

Jouve, 18, rue Saint-Denis, 75001 PARIS

This invention relates to a lock system for protecting a light vehicle against theft, comprising a lock and storage means for removably attaching the lock to a vehicle, the lock comprising a substantially U-shaped shackle and a closure unit to be connected to the free ends of the U-shaped shackle, which closure unit is provided with locking means for retaining the free ends of the U-shaped shackle and with operating means to be operated by a key or the like, coupled with the locking means for at least releasing the locking of the free ends of the U-shaped shackle, and the storage means comprising guide means for at least the legs of the U-shaped shackle and a closure unit holder engaging with the closure unit, the closure unit holder being so positioned relative to the guide means that the closure unit in stored position prevents the removal of at least the legs of the U-shaped shackle from the guide means.

Such a lock system is disclosed in DE-U-90 01 015.9.

By providing a lock system with storage means, it is rendered easier to take a shackle lock along on such vehicles.

The closure unit holder of this known lock is designed as a locking projection elastically returning to its locking position. For removing the lock from the storage means, the locking projection must be pushed from its locking position while simultaneously removing the lock from the storage means lest the locking projection returns immediately to its locking position, thereby preventing removal of the lock again.

A drawback of this known lock system is that the lock cannot be removed with one hand or at any rate can be removed with one hand only with great difficulty. This is irksome because after parking the vehicle, one often has a bag or the like in one's hand which must then be put down to operate the lock system or because one wishes to hold on to the bicycle until it has been attached to an object by means of the shackle lock so as to prevent the bike from falling.

A further disadvantage of this known lock system is that the resilient locking projection is susceptible to distortion and unsuitable for clamping the lock in the guide with pretension in longitudinal direction of the U-shaped lock shackle.

The object of the present invention is to provide a lock for light vehicles, in which the disadvantage referred to is overcome.

This object is realized according to the invention in that the closure unit holder is so constructed that it is uncoupled when the locking is released.

As a result, the closure unit holder remains in the unlocked state upon release of the locking and no further operation of the lock system is necessary to remove the closure unit from the storage means.

When re-placing the lock, the closure unit holder is set back into the locking position by manual effort, so that in a simple manner a sufficient clamping of the lock in the longitudinal direction of the U-shaped shackle can be obtained.

The displacement of the closure unit holder is not dependent on elasticity, so that a stable construction resistant to daily use under severe conditions can be utilized.

The closure unit holder can be pivotally suspended, be provided with a lock stop spaced from the pivot pin and, in locked position, be coupled with the closure unit at a distance from the pivot pin.

In that case, in the uncoupled state, the closure unit holder is pivoted away from the closure unit, so that the complete lock can be taken from the storage means in a simple manner. Because in the locked condition the closure unit holder is coupled with the closure unit at a distance from the pivot pin, an additional fixation of the lock is obtained, whereby rattling of the lock is prevented. Moreover, in this embodiment there are no separate means required to which the closure unit holder is coupled in the locked condition for retaining the closure unit holder in that position.

Instead of being coupled to the closure unit, the closure unit holder can in the locked position be coupled with an element fixedly connected to the other parts of the storage means. This offers the advantage that the closure unit holder can also be retained in the locked position when the closure unit is located in the holder while uncoupled from the U-shaped lock shackle. This, in turn, is advantageous inasmuch as in that case the closure unit can be stored without first having to be coupled to the U-shaped shackle and later it need not be uncoupled from the U-shaped shackle first for the vehicle to be locked.

The closure unit holder can be constructed for retaining the closure unit while it is uncoupled from the U-shaped lock shackle.

This makes it possible for the lock to be attached to a vehicle in locked condition without the closure unit being connected to the free ends of the U-shaped shackle. Thus, the legs of the U-shaped shackle can be attached to the bicycle in a position where they extend on opposite sides of the vehicle along parts thereof and this shackle can be attached to the vehicle while occupying very little space in a symmetrical position relative to the vehicle.

Further, the attachment of the closure unit independent of the location of the free ends of the U-shaped shackle makes it possible for the closure unit to be mounted on the vehicle at a location that is readily accessible to the user for attaching the lock to the vehicle.

A further advantage of this feature is that it is not necessary, after the lock has been opened for the use of the vehicle, to re-lock it before attaching it to the vehicle. Later, after being removed from the storage means, the lock is already in the opened position so that it need not be opened first for the vehicle to be locked by closing the lock.

The holder can be formed by two pins each having a free end, the shape and mutual distance of the pins corresponding to the shape and the mutual distance of the free ends of the U-shaped shackle, in such a manner that they can also be connected to the closure unit and retained by the locking means thereof, so that the closure unit is connected with the pins in the locked condition.

This offers the advantage that the closure unit, after being connected to the pins, is connected to the vehicle in locked fashion and retains the U-shaped shackle in its guides, so that the entire lock can be attached to the vehicle while being well protected against theft. When the locking is released, the closure unit is at the same time uncoupled from the pins, so that the closure unit can be removed from the storage means without further operation of the lock system.

A lock system according to the invention can equally well be used in conjunction with a light vehicle other than a motorbike. Examples of such vehicles are described in applicant's EP-A-0 337 552, which is hereby referred to.

The invention can further be incorporated in a set of fastening means which are adapted for use in combination with a particular shackle lock comprising a U-shaped shackle, commercially available as a separate item, or which are adjustable for adaptation to the size of the shackle lock for use in combination with shackle locks of different size, commercially available as separate items.

Hereinafter, the invention will be further explained and illustrated, by way of example, with reference to some embodiments as shown in the accompanying drawings, in which:

Fig. 1 is a perspective view of a first embodiment of the invention;

Fig. 2 is a perspective view of a second embodiment of the invention;

Fig. 3 is a perspective view of a third embodiment of the invention;

Fig. 4 is a perspective view of a bicycle with a lock system according to a fourth embodiment of the invention;

Fig. 5 is a perspective exploded view of the embodiment according to Fig. 4;

Fig. 6 is a perspective view of a fifth embodiment of the invention;

Fig. 7 is a top plan view of a luggage carrier with a lock system according to a fifth embodiment of the invention;

Fig. 8 is a sectional side elevation taken on the line VIII-VIII of Fig. 7;

Fig. 9 is a cut-off view similar to Fig. 8, in which the lock system is in a different position;

Fig. 10 is a top plan view of a luggage carrier with a lock system according to a sixth embodiment of the invention;

Fig. 11 is a sectional side elevation taken on the line XI-XI of Fig. 10;

Fig. 12 is a cut-off view similar to Fig. 11, in which the lock system is in a different position;

Fig. 13 is a top plan view of a luggage carrier with a lock system according to a seventh embodiment of the invention;

Fig. 14 is a sectional side elevation taken on the line XIV-XIV of Fig. 13;

Fig. 15 is a cut-off view similar to Fig. 14, in which the lock system is in a different position.

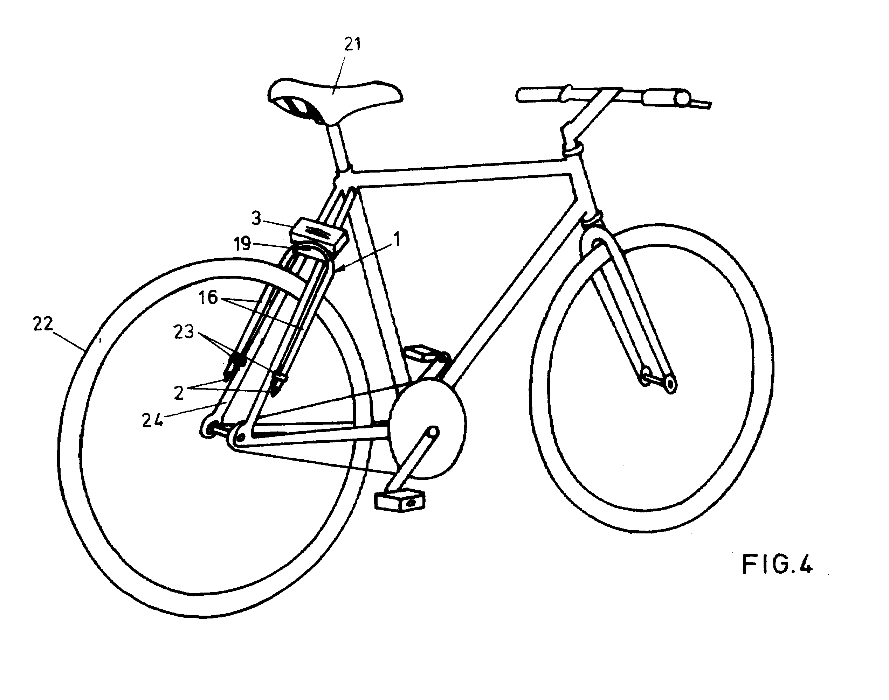

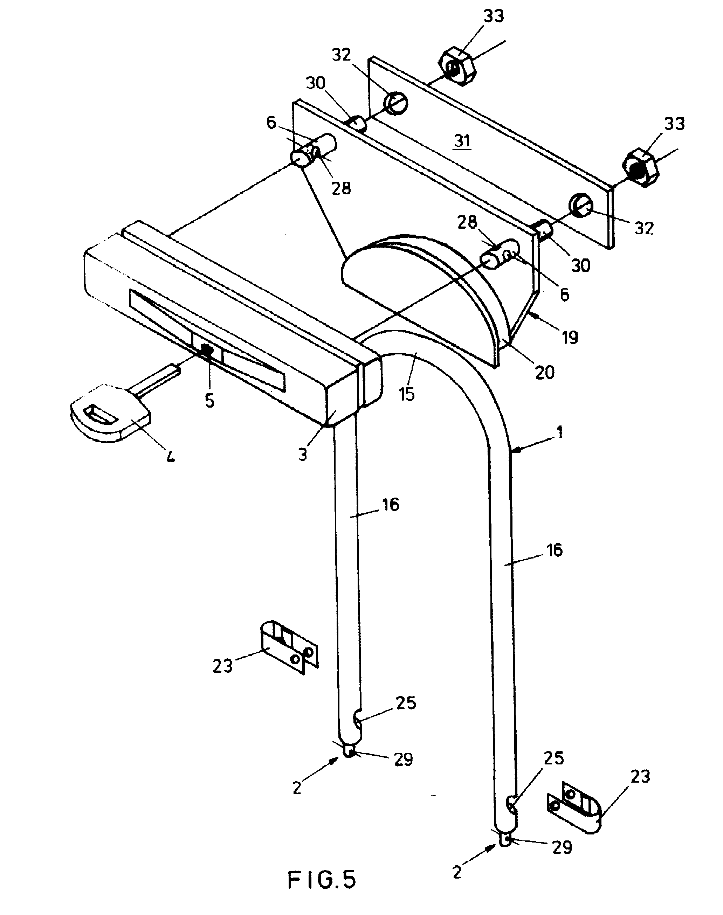

The invention will first be explained with reference to the embodiment shown in Figs 4 and 5.

The lock system for protecting a bicycle against theft as shown in these figures comprises a lock and storage means for removably attaching the lock to the bicycle. The lock has a substantially U-shaped shackle 1 and a closure unit 3. The closure unit 3 comprises locking means (not shown) for retaining the free ends 2 of the U-shaped shackle 1 and operating means 5 to be operated by a key 4 or the like, which are coupled with the locking means, at least for releasing the locking of the free ends 2 of the U-shaped shackle 1.

The storage means comprise two pins 6 each having a free end. The pins 6 correspond in shape and mutual distance to the shape and mutual distance of the free ends 2 of the U-shaped shackle 1, in such a manner that they can also be connected with the closure unit 3 and retained by the locking means thereof. In the lock system according to the present embodiment, the locking means can engage holes 29 in the free ends 2 of the legs 16 of the U-shaped shackle 1 or in correspondingly shaped recesses 28 in pins 6. The storage means further comprise guide means 23 for the legs 16 of the U-shaped shackle 1. The pins 6 are so arranged relative to the guide means 23 that the closure unit 3, in the position where it is connected to the pins 6, prevents at least the legs 16 of the U-shaped shackle 1 from being removed from the guide means.

The lock can be attached to the bicycle in locked position without the closure unit 3 being connected to the free ends 2 of the U-shaped shackle 1. The legs of the U-shaped shackle 1 extend on either side of the bicycle along the rear wheel thereof when the lock is attached to the bicycle. In this position, the U-shaped shackle 1 occupies very little space and is attached symmetrically relative to the bicycle. The drawings show that this arrangement affects the appearance of the bicycle in question, a so-called ATB (All Terrain Bike) only to a very limited extent. With the U-shaped shackle 1 in this position, it is impossible to connect the closure unit 3 with the free ends 2 of the U-shaped shackle 1 without blocking the mobility of the bicycle. However, as a result of the closure unit being attached independently of the free ends 2 of the U-shaped shackle 1, thereby preventing displacement of the legs 16 from the guides 23, yet a reliable, locked attachment to the bike of the U-shaped shackle 1 as well as of the closure unit 3 is obtained.

The location of the pins 6 above the rear wheel 22 of the bicycle is readily accessible for the user, so that the lock can easily be attached to the bicycle and detached from the bicycle.

More in detail, it can be observed in regard of the embodiment according to Figs 4 and 5, that the storage means comprise a shackle holder 19 with a groove 20. The configuration and the cross-section of the groove 20 correspond with the configuration and the cross-section of the closed end 15 of the U-shaped shackle 1, in such a manner that this closed end 15 can be fitted at least partly in the groove 20. The storage means further comprise guides for the legs 16 of the U-shaped shackle 1, designed as brackets 23 mounted on the rear fork of a bicycle.

The pins 6 are positioned in such a manner that a closure unit 3 connected to those pins 6 blocks the removal of the U-shaped shackle 1 from the groove 20. For that purpose, the pins 6 are mounted on the side of the groove 20 remote from the guide brackets 23, in such a manner that the closure unit 3, in the position where it is connected to the pins 6, is disposed opposite the bottom of the groove 20 in at least substantially adjacent relationship relative to the U-shaped shackle 1 of the lock placed in the groove 20.

As shown in Fig. 5, for mounting the shackle holder 19 on the rear fork of a bicycle, it may comprise studs 30 each provided with a screw thread, a clamping strip 31 with holes 32 spaced apart in correspondence with the mutual distance between the studs 30, and nuts 33. The rear fork can be clamped between the clamping strip 31 and the shackle holder 19 by tightening the nuts 33.

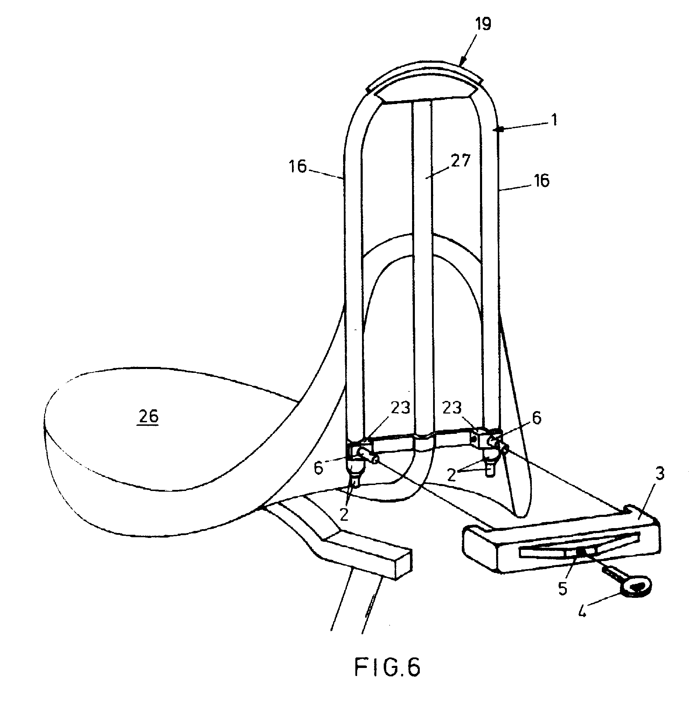

Fig. 6 shows an embodiment of the lock system of the invention that likewise comprises a shackle holder 19 with a groove 20 and likewise prevents removal of the U-shaped shackle 1 from the groove 20 if the closure unit is connected with the pins 6. The pins 6, however, are arranged in the area of the guides 23, while projections (not shown) are provided in the guides 23, each corresponding with a recess 25 (see Fig. 5) in one of the legs 16 of the U-shaped shackle 1. In the position where the closure unit 3 is connected to the pins 6, the closure unit 3 adjoins at least substantially the legs 16 of the U-shaped shackle 1, disposed in the guide 23, so that the release of the engagement between the projections and the recesses 25 is prevented. Naturally, it is also possible, for instance, for the closure unit 3 to be provided with projections for cooperation with the appropriately shaped recesses in the U-shaped shackle 1 so as to prevent the removal of the closed end 15 of the U-shaped shackle 1 from the groove 20.

The shackle holder 19 is mounted on a free end of a rod 27 projecting upwards from behind a saddle 26. Thus, when attached to the vehicle, the U-shaped shackle 1 of the lock at the same time forms a part of a backrest.

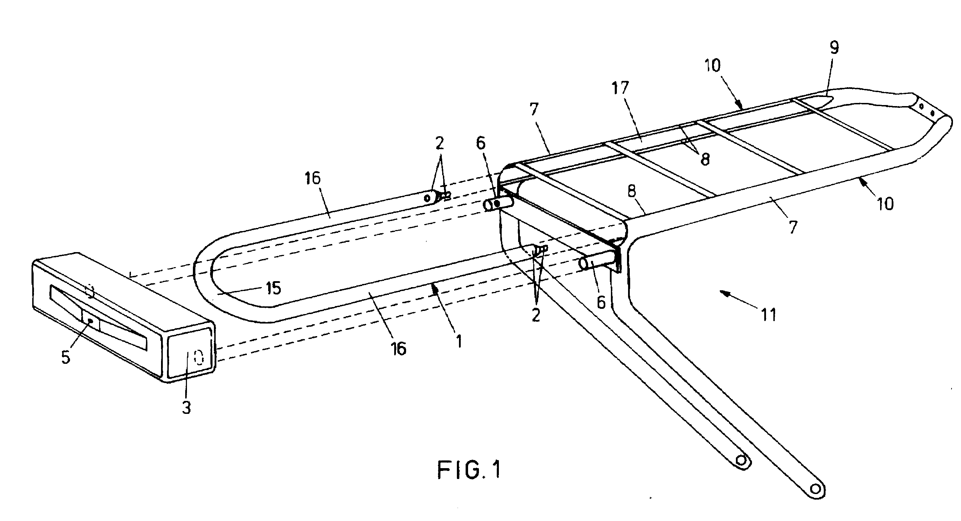

In the embodiment according to Fig. 1, the guide means are designed as two mutually substantially parallel U-sections 7 each having flanges 8 facing each other and spaced apart a distance that corresponds with the width of the U-shaped shackle 1. The storage means further comprise a limitation 9 in the area of similarly oriented ends of the sections 7. The pins 6 are arranged in the area of the ends of sections 7 opposite the limitation 9.

Because the guides are designed as U-sections 7, a very good guidance of the legs 16 of the U-shaped shackle 1 is obtained, so that the U-shaped shackle 1 can easily be fitted in the guide. Furthermore, the legs 16 of the U-shaped shackle 1 are almost completely hidden from view. The U-sections, which are less likely to be damaged than the U-shaped shackle 1, can for instance be designed in a colour adapted to the colours of the vehicle. The limitation 9 ensures that the U-shaped shackle 1 cannot slide undesirably far into the guide but can be clamped between the closure unit 3 connected to the pins 6 and the limitation 9.

The U-sections 7 each form a part of a bar 10 of a luggage carrier 11, so that the guides do not constitute an additional element of the vehicle either and the lock occupies only very little space.

Because neither the closure unit 3 nor the closed end 15 of the U-shaped shackle 1 needs to be slid between the guides, a mudguard of a rear wheel can extend between the guides.

The pins 6 are parallel to and directed away from the U-sections 7 and offset relative to a median plane coinciding with the U-sections. The U-shaped shackle 1 can be shifted between the sections 7 past the pins 6. The closure unit 3 has a width such that, when connected with the pins 6, unit 3 is positioned in front of the sections 7, thereby preventing the U-shaped shackle 1 from sliding past. The orientation of the pins 6 parallel to the sections 7 offers the advantage that the closure unit 3, when positioned over the pins 6, automatically pushes the U-shaped shackle 1 towards the limitation 9, if such is necessary. A further advantage of the orientation of the pins 6 is that it prevents damage to the closure unit 3 and the U-shaped shackle 1 that might result from the closure unit 3 being slid along the U-shaped shackle 1 when fitting the closure unit 3 over the pins 6 or removing it therefrom.

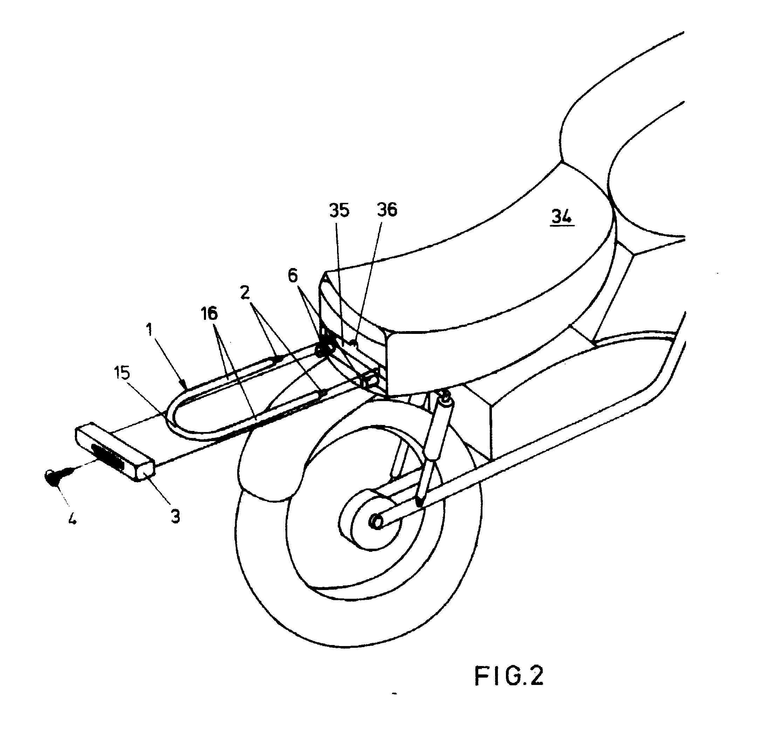

Fig. 2 shows an embodiment in which the guide for the legs 16 of the U-shaped shackle 1 is designed as a slot 35 under a double saddle 34 of a motorbike. An advantage of this embodiment of the invention is that the slot 35 needs to have only a slight depth for receiving the closed end 15 of the U-shaped shackle 1 and for receiving the legs 16 only sections of corresponding cross-section (not shown) need to be provided. Accordingly, between these sections a storage space can be provided for luggage or parts, such as a battery. To facilitate the removal of the U-shaped shackle 1 from the slot 35, the slot 35 is provided with a centrally located recess 36 allowing a finger to engage the closed end 15 of a U-shaped shackle 1 arranged in the slot and pull the shackle 1 from the slot 35.

It is also possible to arrange springs at the ends of the sections remote from the slot 35, which push the U-shaped shackle 1 partly out of the slot 35 upon removal of the closure unit 3 off the pins 6. This offers the further advantage that the U-shaped shackle 1 in stored position is clamped between the springs and the closure unit 3, so that rattling of the shackle 1 is prevented.

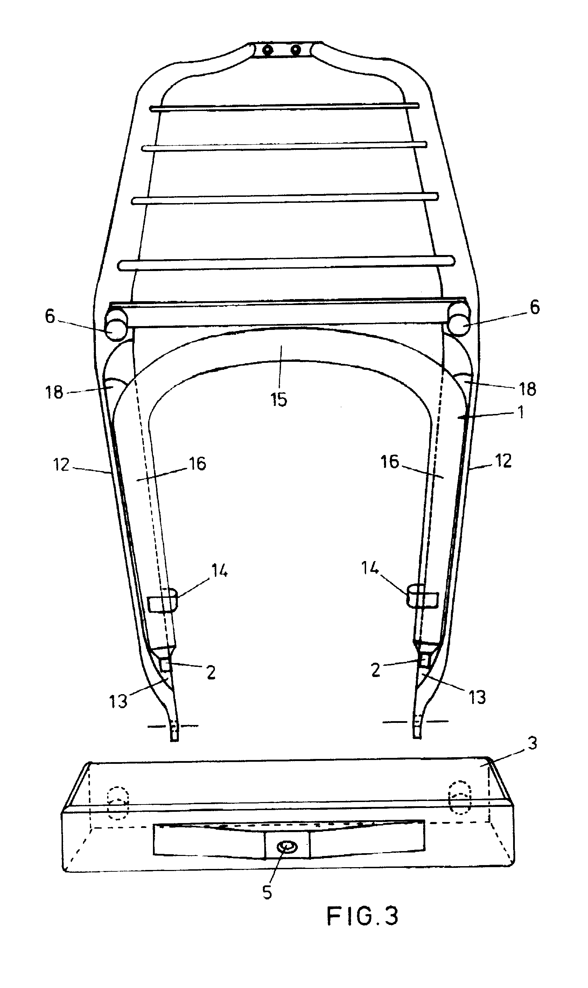

In the embodiment of the invention shown in Fig. 3, the guide means are designed as a pair of mutually substantially parallel L-sections 12 spaced apart a distance corresponding to the width of the U-shaped shackle 1. In the area of the similarly oriented ends 13 of the sections 12, the sections 12 are each provided with a bracket-shaped member 14 for retaining the legs 16 against the L-sections 12 and with a limitation 13. The pins 6 are arranged in the area of the ends of the sections 12 opposite the brackets 14 and the limitation 13. The use of L-sections 12 with brackets 14 as a guide for the legs 16 of the U-shaped shackle 1 offers the advantage that the guide will be relatively unsusceptible to jamming of the U-shaped shackle 1 by distortion of the sections 12. The shackle can always come off the sections 12 to some extent.

For storing the U-shaped shackle 1, the legs 16 must each be passed through a bracket 14 and the U-shaped shackle must be slid along the L-sections 12 until the free ends 2 abut against the limitation 13 and the position shown in Fig. 3 has been reached.

The pins 6 are mounted in line with the L-sections. The brackets 14 are mounted at a distance from the pins 6, such that when the closure unit 3 is detached, the U-shaped shackle 1 can be moved towards the pins 6 until at least the legs 16 of the U-shaped shackle 1 are clear of the brackets 14. When connected with the pins 6, the closure unit 3 blocks the movement of the U-shaped shackle 1 towards the pins 6. By these features, in a simple manner a retention of the U-shaped shackle 1 is obtained.

If a closure unit 3 connected to the pins 6 further blocks movement of the closed end 15 of the U-shaped shackle 1 transversely to the L-sections 12 as well as away from these sections 12, a particularly reliable locking of the U-shaped shackle 1 in stored position is obtained, in that such an arrangement renders it impossible to make use of the brackets 14 as a fulcrum for lever action by pulling the closed end 15 of the shackle 1 so as to bend open the brackets 14.

To prevent displacement of the closed end 15 of the shackle 1, the closure unit 3 is preferably provided with a recess (not shown) that corresponds in shape to the shape of the closed end 15.

The L-sections 12 each form part of an upright of a luggage carrier. This renders the provision of separate sections for the guidance of the shackle unnecessary, so that weight and material are saved.

Arranged between at least a part of the uprights of a luggage carrier is normally the rear wheel of a bicycle. Because the closure unit 3 need not be connected with the free ends 2 of the U-shaped shackle 1, the legs 16 of the shackle 1 can extend in stored position on either side along the rear wheel of a bicycle, without rotation of the wheel being prevented.

The sections 7, 12 of the guides of the embodiments according to Figs 1 and 3 are preferably designed as metal tubular sections, of which a wall portion 17, 18 is recessed against an opposite wall portion of the tubular section 7, 12 Thus, in a simple manner, a very rigid and strong U- or L-section can be obtained.

In the guides according to these embodiments, the limitation is formed as a closed end 9, 13 of the corresponding section 7, 12. Thus, a very compact limitation of the displacement of the U-shaped shackle 1 away from the pins 6 can be obtained, this limitation engaging the free ends 2 of the shackle 1, which are slid into the guide away from the pins 6.

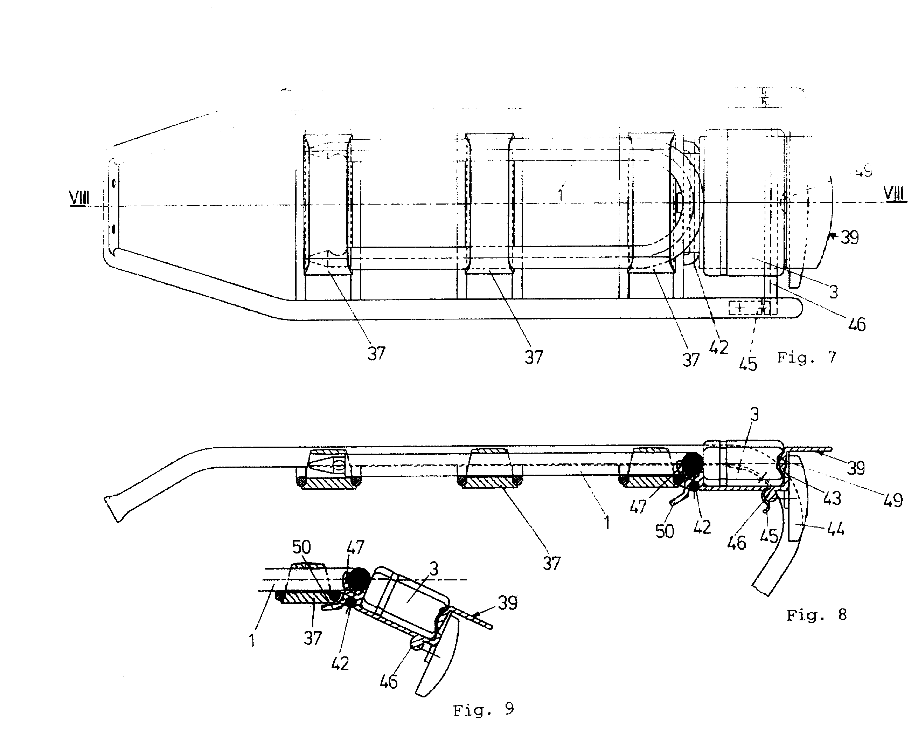

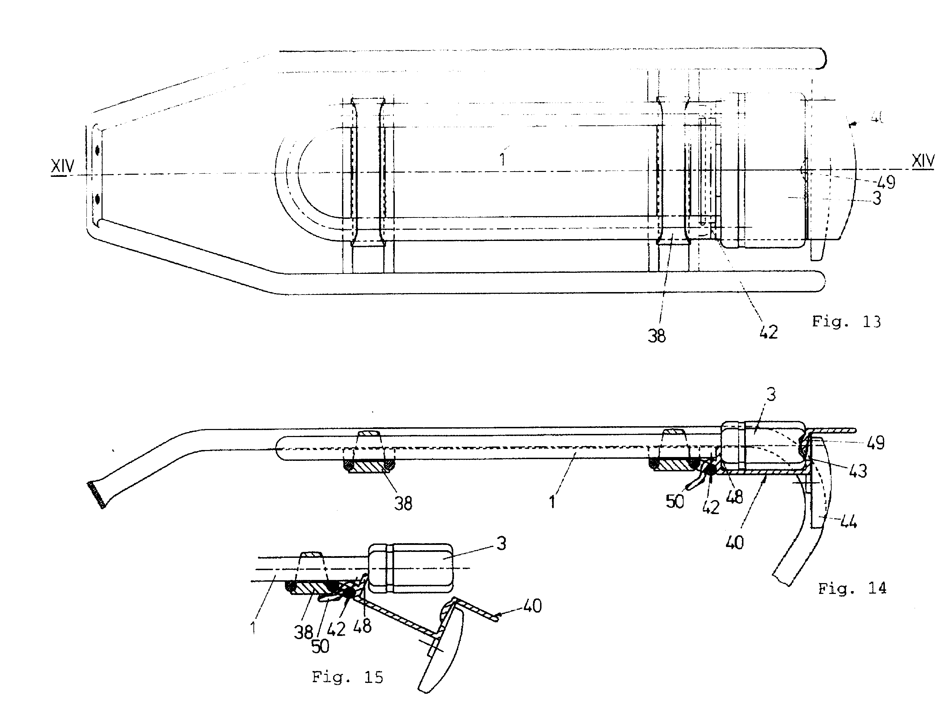

In the lock systems according to Figs 7-14, the guide means for the U-shaped shackle 1 are designed as plastics elements 37, 38.

In Figs 7, 8, 10, 11, 13, and 14 the lock systems are shown in the locked position. The closure unit 3 is retained by a closure unit holder 39, 40, 41 comprising a lock stop 43 and engaging the unit 3 to maintain it in a position in line with the longitudinal guide comprised of the elements 37, 38, so that the U-shaped shackle 1 cannot move rearwards.

In each of the closure unit holders 39, 40, 41, a reflector 43 is mounted on the lock stop 43, so that a separate means of attachment for that purpose is unnecessary. Further, in the position shown the reflector 44 is well protected against damage and the absence of a reflector under the closure unit holder 39, 40, 41 prevents the pivotal motion of the closure unit holder 39, 40, 41 being impeded by a separately mounted reflector.

The closure unit holders 39, 40, 41 are each pivotable about a pin 42 between the locking position and an uncoupled position shown in Figs 9, 12, 15. The lock stop 43 is spaced from the pivot pin 42 in such a way that in the locking position the stop 43 and the pivot pin 42 are on opposite sides of the closure unit.

When releasing the locking, each of the closure unit holders 39, 40, 41 is uncoupled.

In the lock system according to Figs 7-9, at a distance from the pivot pin 42 the closure unit holder 39 in locking position is coupled with a spring member 45 fixedly connected to the other parts of the storage means. For that purpose, the closure unit holder 39 is provided with a rod 46. When the closure unit 3 is uncoupled from the U-shaped lock shackle 1, it is located in the closure unit holder 39.

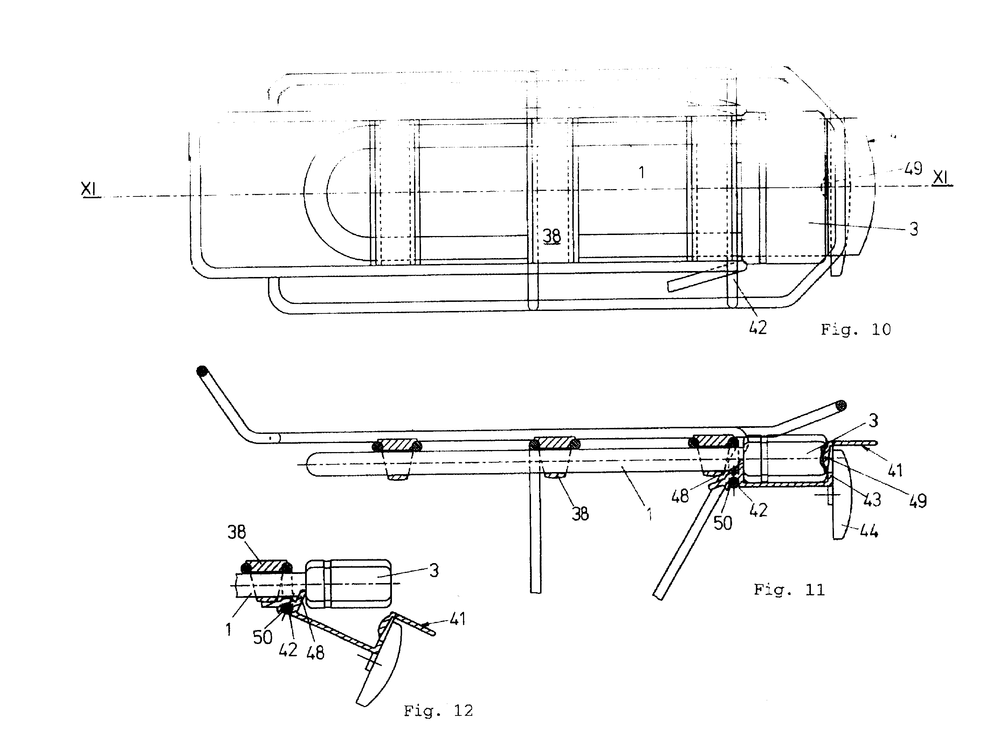

In the lock systems according to Figs 10-15, at a distance from the pivot pin 42 the closure unit holders 40, 41 in locking position are coupled to the respective closure units 3. This offers the advantage that no separate means for retaining the closure unit holders 40, 41 are necesary and that the lock is additionally fixated by the coupling to the respective closure unit holders 40, 41.

In each of the lock systems according to Figs 7-15, the pivot pin 42 is oriented perpendicularly to the longitudinal guide comprised of the plastics elements 37, 38 and parallel to the plane of the U-shaped shackle 1 in stored position. Each of the closure unit holders 39-41 is provided with a retractable stop 47, 48 between the lock stop 43 and the pivot pin 42. The retractable stops 47, 48 are disposed outside the longitudinal guide and the produced parts thereof when the closure unit holders 39-41 are uncoupled for releasing the locking. Forward displacement of the lock in the locking position is hereby prevented.

Further, in each of the lock systems according to Figs 7-15, the pivot pin 42 extends outside the longitudinal guide, while the retractable stop 47, 48 is arranged in longitudinal direction of the longitudinal guide approximately at the pivot pin 42. The retractable stop 47, 48 accordingly pivots rearwards upon release of the locking and thereby pushes the lock rearwards.

In the embodiment according to Figs 7-9, the U-shaped shackle 1 is displaced rearwards by the retractable stop 47, so that a space is created between the rearward element 37 and the bottom of the U-shaped part. This simplifies the removal of the shackle 1.

In the embodiments according to Figs 10-15, the closure unit which is connected to the lock shackle 1 is moved rearwards by the retractable stop 48. In this embodiment, by quickly pivoting the closure unit holders 40 and 41, the lock can be moved rearwards over a large distance because the lock is then free to slide on, slowed down only by the friction of the longitudinal guide of the lock shackle 1.

On the side remote from the U-shaped shackle 1, the closure units 3 according to Figs 7-15 are each provided with a key opening (not shown in the drawing) and the lock stop 43 is provided with a flexible element 49 which covers the opening when the closure unit is in locked position. This prevents moisture and dirt from entering the lock.

In the embodiments according to Figs 10-11, the coupling between the closure unit holder 40, 41 and the closure unit 3, which is capable of retaining the closure unit holder 40, 41 in the locking position, is formed by the flexible element 49 engaging the closure unit 3. The flexible element 49 is resilient and hence forms an elastic catch. Because the flexible element is moreover made of relatively soft material, damage to the lock is prevented.

The key opening may be located in a recess, with the flexible element 49 projecting into the recess in locked position. Thus, a particularly stable coupling of the closure unit holder to the closure unit is obtained which is not released, even in the event of heavy shocks.

In each of the embodiments according to Figs 7-15, the closure unit holder 39, 40, 41 is pivoted downwards in the uncoupled condition and provided with an arm 50 which extends from the pivot pin, directed away from the lock stop 43. In uncoupled condition of the closure unit holder 39, 40, 41, the arm 50 is disposed in subjacent abutment with the longitudinal guide 37, 38. This arm bounds the angle through which the closure unit holder 39, 40, 41 can pivot downwards, so that damage is avoided to a subjacent mudguard or to the closure unit holder 39, 40, 41 itself as a result of contact with the wheel of the bicycle.

It is observed that naturally the invention is not limited to the embodiments shown. Within the framework of the invention, many other variants are conceivable.

Thus, there may be provided a shackle holder, to be attached to the handlebar, for the closed end of the U-shaped shackle, this shackle holder being provided with the pins for attaching the closure unit in combination with brackets to be attached to a front fork for guiding the legs of the U-shaped shackle. It is also possible, for instance, to make the embodiment according to Fig. 5 adjustable by designing the shackle holder as divided along its median plane and to provide, instead of holes 32, slots in the longitudinal direction of the clamping strip 31.

The closure unit holders 39-41 according to Figs 7-15 may be upwardly pivotable, instead of downwardly pivotable.

Instead of being attached to a luggage carrier, the closure unit holder and the guide means may also be connected to an intermediate carrier, which can be attached to a luggage carrier or another part of a bicycle.

## Claims

1. A lock system for protecting a light vehicle against theft, comprising a lock and storage means for removably attaching the lock to a vehicle, the lock comprising a substantially U-shaped shackle (1) and a closure unit (3) to be connected to the free ends (2) of the U-shaped shackle (1), which closure unit is provided with locking means for retaining the free ends of the U-shaped shackle (1) and with operating means (5) to be operated by a key

(4) or the like, coupled with the locking means for at least releasing the locking of the free ends (2) of the U-shaped shackle (1), and the storage means comprising guide means for at least the legs (16) of the U-shaped shackle (1) and a closure unit holder (6, 39, 40, 41) engaging with the closure unit (3), the closure unit holder being so positioned relative to the guide means that the closure unit (3) in stored position prevents the removal of at least the legs (16) of the U-shaped shackle (1) from the guide means, characterized in that the closure unit holder (6, 39, 40, 41) is so constructed that it is uncoupled when the locking is released.

2. A lock system according to claim 1, characterized in that the closure unit holder (40, 41) is pivotally suspended, comprises a lock stop (43) spaced from the pivot pin (42) and in locked condition is coupled with the closure unit (3) at a distance from the pivot pin.

3. A lock system according to claim 1, characterized in that the closure unit holder (39) is pivotally suspended, comprises a lock stop (43) spaced from the pivot pin (42) and in locked condition is coupled, at a distance from the pivot pin (42), with an element (45) fixedly connected to the other parts of the storage means.

4. A lock system according to claim 2 or 3, characterized in that the guide means comprise a longitudinal guide (37, 38) which the U-shaped shackle (1) can be inserted in, the pivot pin (42) is oriented perpendicularly to the longitudinal guide and parallel to the plane of the U-shaped shackle (1) in stored position and the closure unit holder (39, 40, 41) comprises a retractable stop (47, 48) between the lock stop (43) and the pivot pin (42), in such a manner that the retractable stop is located outside the longitudinal guide and the produced parts thereof when the closure unit holder (39, 40, 41) is uncoupled for releasing the locking.

5. A lock system according to claim 4, characterized in that the pivot pin (42) extends outside the longitudinal guide and the retractable stop (47, 48) is arranged in the longitudinal direction of the guide, approximately at the the pivot pin.

6. A lock system according to any one of claims 2-5, characterized in that the closure unit (3) comprises a key opening (5) on the side remote from the U-shaped shackle (1) and the lock stop (43) is provided with a flexible element (49) covering the opening when the closure unit holder (39, 40, 41) is in locked condition.

7. A lock system according to claims 2 and 6, characterized in that the coupling between the closure unit holder (40, 41) and the closure unit, which can retain the closure unit holder in the locking position is formed by the flexible element (49) engaging with the closure unit.

8. A lock system according to claim 7, characterized in that the key opening (5) is located in a recess and the flexible element projects into this recess in the locked condition.

9. A lock system according to any one of claims 2-8, characterized in that the lock stop (43) comprises a reflector (44) on the side directed away from the longitudinal guide.

10. A lock system according to any one of claims 2-9, characterized in that the closure unit holder (39, 40, 41) is pivoted downwards in the uncoupled position and comprises an arm (50) projecting from the pivot pin, directed away from the lock stop (43), the arm (50) being disposed in subjacent abutment with the guide means (37, 38) in the uncoupled position of the closure unit holder.

11. A lock system according to any one of the preceding claims, characterized in that closure unit holder (6, 39) is designed for retaining the closure unit (3) when it is uncoupled from the U-shaped shackle (1).

12. A lock system according to claim 11, characterized in that the closure unit holder is formed by two pins (6) each having a free end, the shape and mutual distance of said pins (6) corresponding to the shape and mutual distance of the free ends (2) of the U-shaped shackle (1), in such a manner that said pins can likewise be connected to the closure unit (3) and retained by the locking means thereof, so that the closure unit (3) is connected with the pins (6) in locked condition.

13. A lock system according to any one of the preceding claims, characterized in that the guide means are designed as two mutually substantially parallel U-sections (7) which have flanges (8) facing each other and are mutually spaced in correspondence with the width of the U-shaped shackle (1), the storage means further comprising a limitation (9) in the area of similarly oriented ends of the sections (7) and the closure unit holder (6) being arranged in the area of the ends of the sections (7) opposite the limitation (9).

14. A lock system according to claim 13, characterized in that the U-sections (7) each form a part of a bar (10) of a luggage carrier (11).

15. A lock system according to claims 12 and 13, characterized in that the pins (6) are arranged parallel to and directed away from the U-sections (7) and offset relative to a median plane coinciding with the U-sections (7).

16. A lock system according to any one of claims 1-12, characterized in that the guide means are designed as a pair of L-sections (12) spaced apart a distance corresponding to the width of the U-shaped shackle (1) and the sections, in the area of the similarly oriented ends (13) thereof, are each provided with a bracket-shaped member (14) for retaining the legs (16) against the L-sections (12) and with a limitation (13), the closure unit holder (6) being arranged in the area of the ends of the sections (12) opposite the brackets (14) and the limitation (13).

17. A lock system according to claim 16, characterized in that the closure unit holder (6) is arranged in line with the L-sections (12) and the bracket-shaped members (14) are arranged at a distance from the closure unit holder (6), such that when a closure unit (3) is detached, the U-shaped shackle (1) can be moved towards the closure unit holder (6) until at least the legs (16) of the U-shaped shackle (1) are clear of the bracket-shaped members (14), while a closure unit (3) connected to the closure unit holder (6) at least substantially blocks displacement of the U-shaped shackle (1) towards the closure unit holder (6).

18. A lock system according to claim 17, characterized in that in locked condition a closure unit (3) connected to the closure unit holder (6) blocks displacement of the closed end (15) of the U-shaped shackle (1) transversely to the L-sections (12) and away from these sections (12).

19. A lock system according to claim 16, characterized in that the L-sections (12) each form a part of an upright of a luggage carrier.

20. A lock system according to any one of claims 13-19, characterized in that the sections (7, 12) are tubular sections having a wall portion (17, 18) recessed against the opposite wall portion of that tubular section (7, 12).

21. A lock system according to any one of claims 13-19, characterized in that the limitation is designed as a closed end (9, 13) of the corresponding section (7, 12).

22. A lock system according to claim 11 or 12, characterized in that the storage means comprise a shackle holder (19) having a groove (20) of a configuration and a cross-section corresponding to the configuration and the cross-section of the closed end (15) of the U-shaped shackle (1), in such a manner that this closed end (15) can at least partly be placed in said groove (20), as well as guides (23) for the legs (16) of the U-shaped shackle (1), the closure unit holder being so arranged that in locked position the closure unit (3) blocks displacement of the U-shaped shackle (1) from the groove (20).

23. A lock system according to claim 22, characterized in that the closure unit holder (6) is arranged on the side of the groove (20) directed away from the guides (23), in such a manner that the closure unit (3), in a position wherein it is connected to the closure unit holder (6), is positioned opposite the bottom of the groove (20) substantially adjacent to a corresponding U-shaped shackle (1) of the lock placed in the groove (20).

24. A lock system according to claim 23, characterized in that the shackle holder (19) is mounted against the rear fork (24) of a bicyle between a saddle (21) and a rear wheel thereof and the guides (23) are mounted on a leg of the rear fork (24) of the bicycle in spaced relationship to the shackle holder (19).

25. A lock system according to claim 22, characterized in that the closure unit holder (6) is arranged in the area of the guides (23), projections are provided in the guides (23), each corresponding with a recess (25) in one of the legs (16) of the U-shaped shackle (1) and the closure unit (3) in the locked position is at least substantially adjacent the legs (16) of the U-shaped shackle (1) disposed in the guide (23).

26. A lock system according to claim 25, characterized in that the shackle holder (19) is mounted on a free end of a rod (27) projecting upwards behind a saddle (26).

27. Storage means for use in a lock system according to any one of the preceding claims.

FIG. 1

FIG.2

FIG.3

FIG.4.

FIG.5

FIG.6

Fig. 7

Fig. 8

Fig. 9

EP 0 492 742 A1

Fig. 10

Fig. 11

Fig. 12

EP 0 492 742 A1

XIV _____ XIV

1

49

3

38

42

Fig. 13

3

49

43

50 42 48

40

44

38

1

Fig. 14

3

40

1

38 42 48

50

Fig. 15

EP 0 492 742 A1

17

EP 0 492 742 A1

**European Patent Office**

**EUROPEAN SEARCH REPORT**

Application Number

EP    91 20 3403

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | DE-U-9 001 015 (AUG. HINKHAUS GMBH & CO KG) | 1,27 | B62H5/00 |
| A,D | * page 7, line 30 - page 8, line 30; figures * | 3 | B62J11/00 |

TECHNICAL FIELDS SEARCHED (Int. Cl.5)

B62J
B62H

The present search report has been drawn up for all claims

| Place of search | Date of completion of the search | Examiner |
|---|---|---|
| THE HAGUE | 14 APRIL 1992 | FRANKS B.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

18